# FASCICULE DE BREVET EUROPEEN

(11) **EP 2 620 325 B1**
(45) Date de publication et mention de la délivrance du brevet: **04.09.2019**
(21) Numéro de dépôt: 13152945.5
(22) Date de dépôt: 28.01.2013
(51) Int. Cl.: F21S 41/689, F21S 45/10, B60Q 1/14, F21V 29/00, F21V 14/08, B60Q 1/076

(54) **Module optique**
Optisches Modul
Optical module

(30) Priorité: 30.01.2012 FR 1250864
(43) Date de publication de la demande: 31.07.2013
(73) Titulaire: AML Systems, 75008 Paris (FR)
(72) Inventeur: Chiattelli, Claudio, 93150 LE BLANC-MESNIL (FR); Rivier, Cyril, 92400 COURBEVOIE (FR); Koulouh, Hassan, 93310 LE PRE SAINT GERVAIS (FR)
(74) Mandataire: Gevers & Orès

(56) Documents cités:
- EP-A1- 1 867 917
- EP-A1- 2 088 364
- EP-A1- 2 405 191
- EP-A2- 1 820 694
- DE-A1- 10 216 678
- DE-A1-102005 021 704
- JP-A- S63 292 501
- US-A1- 2009 190 368

## Description

L'invention concerne un module optique, notamment destiné à s'insérer dans un projecteur automobile, en particulier un projecteur elliptique, installé à l'avant du véhicule automobile.

EP 2 088 364 A1, EP 1 820 694 A2 et JP S63-292501 A décrivent des modules optiques connus.

De tels modules optiques possèdent une source lumineuse qui projette de la lumière sur un réflecteur. La lumière est ensuite réfléchie sur une lentille afin d'être renversée et renvoyée sous forme de faisceau lumineux à l'extérieur du véhicule.

Il est connu d'utiliser une barrette de coupure rotative actionnée électriquement pour se déplacer, sur commande, d'une première position angulaire, dans laquelle elle occulte une partie du faisceau lumineux afin de limiter la portée du projecteur à celle des feux de croisement pour ne pas éblouir les autres conducteurs circulant en sens inverse, à une deuxième position angulaire, dans laquelle elle n'occulte pas le faisceau lumineux, la portée du projecteur correspondant alors à celle des feux de route.

Il existe également des projecteurs dits multi-fonctions, dans lesquels la barrette de coupure peut adopter plus de deux positions angulaires pour occulter de façon sélective le faisceau lumineux.

La barrette est actionnée électriquement par un actionneur comprenant un moteur électrique et un capteur de la position angulaire de la barrette de coupure. Elle est positionnée sur un support de barrette, en matière plastique et surmoulé sur des extrémités longitudinales de la barrette. Le support de la barrette comprend une première partie liant la barrette au moteur par l'intermédiaire d'un engrenage et une deuxième partie comprenant des moyens de rappel de la barrette vers la position dans laquelle elle obture le faisceau lumineux.

Le moteur est monté dans le module optique sur un support moteur situé vers l'avant du module optique, c'est-à-dire entre le moteur et la lentille. Le support moteur peut être choisi en métal, de par la solidité de ce matériau, mais ce matériau présente l'inconvénient d'être lourd et coûteux. Une autre solution consiste à utiliser un matériau plastique. Cependant, le module optique peut être soumis à la chaleur des rayons solaires qui entrent dans le module optique par l'intermédiaire de la lentille, par exemple lorsque le véhicule est stationné en plein soleil. Les rayons traversant la lentille convergent en effet vers le support moteur et concentrent ainsi la chaleur sur ce dernier. Le support moteur étant en plastique, il risque alors d'être endommagé.

Il est connu, pour remédier à cet inconvénient de disposer un écran thermique en métal entre la lentille et le support moteur afin de protéger ce dernier de la chaleur des rayons du soleil. Cet écran présente cependant les désavantages d'être lourd, coûteux et encombrant.

Un autre problème vient du fait que les moteurs des modules optiques connus entrainent les barrettes de coupure par l'intermédiaire d'un engrenage à denture externe. Ces engrenages à denture externe présentent un encombrement important dans le sens de la hauteur du module optique afin d'entrainer la barrette de coupure selon son axe de rotation. Ces engrenages à denture externe sont situés sur le coté des barrettes de coupure, c'est-à-dire au-delà des extrémités longitudinales des barrettes, ce qui augmente également l'encombrement longitudinal du module optique.

L'invention vise donc à améliorer la situation.

La revendication 1 propose à cet effet, un module optique, notamment pour véhicule automobile, comprenant une lentille et un moteur monté dans le module optique sur un support moteur. Selon l'invention, un pignon du moteur entraîne une barrette de coupure d'un faisceau lumineux par l'intermédiaire d'un engrenage à denture intérieure.

L'intérêt d'un engrenage à denture intérieure est de pouvoir réduire l'encombrement du module.

Dans une forme de réalisation intéressante de l'invention, le rapport d'engrenage entre le pignon du moteur et l'engrenage est de 1/3.

Selon un aspect de l'invention, le moteur est situé sous un axe de rotation de la barrette de coupure.

Selon l'invention, la barrette présente un encombrement longitudinal, ledit moteur étant situé à l'intérieur de l'encombrement longitudinal de la barrette de coupure. On réduit de la sorte l'encombrement longitudinal du module optique.

Dans l'invention, la barrette présente un encombrement longitudinal, l'engrenage étant situé à l'intérieur de l'encombrement longitudinal de la barrette de coupure. L'engrenage n'est plus situé sur le coté de la barrette et on réduit de la sorte l'encombrement longitudinal du module optique.

L'engrenage à denture interne est particulièrement avantageux parce qu'il permet d'entrainer la barrette selon son axe de rotation en positionnant le moteur au plus proche de la barrette et sous l'axe de rotation de cette dernière, limitant ainsi l'encombrement du mécanisme de coupure.

Le moteur est situé entre la lentille et le support moteur.

Ainsi, grâce à l'invention, les rayons solaires traversant la lentille n'arrivent plus directement sur le support moteur situé à l'arrière du module optique, mais sur une surface extérieure du moteur en métal, donc plus résistante à la chaleur que le support moteur en plastique.

Dans une forme de réalisation de l'invention, le moteur comprend une zone de connexion du moteur à une source d'énergie, la zone étant en plastique de couleur claire. Avantageusement, ladite zone est de couleur blanche. Selon un exemple de réalisation de l'invention, ladite zone est transparente. Dans une forme intéressante de l'invention, ladite zone est translucide.

D'autres caractéristiques et avantages de l'invention apparaîtront encore mieux à la lecture de la description qui suit d'un exemple de réalisation du module optique de l'invention en référence au dessin annexé, sur lequel :
- la figure 1 est une vue schématique d'un module optique avec un mécanisme de coupure;
- la figure 2 est une vue en perspective éclatée du mécanisme de coupure et
- la figure 3 est une vue en perspective du mécanisme de coupure illustré à la figure 2, une fois assemblé.

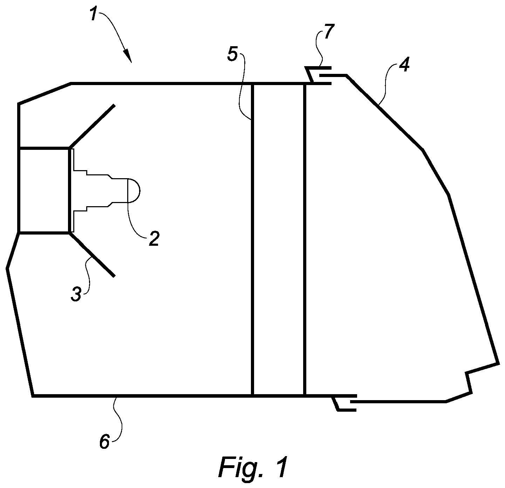

La figure 1 permet d'illustrer un module optique 1 selon l'invention. Un tel module optique comprend un boîtier 6, à l'intérieur duquel se trouve une source lumineuse 2 produisant un faisceau lumineux réfléchi par un réflecteur optique 3. Le faisceau lumineux est alors projeté sur une lentille 4 qui le renverse et le renvoie sur la route située devant le véhicule dans lequel le module optique est positionné. La lentille 4 est disposée sur un porte lentille 7 solidarisé au boîtier 6. La source lumineuse est ici une lampe à halogène.

Un mécanisme de coupure 5 est disposé entre le réflecteur 3 et la lentille 4. Ce mécanisme de coupure 5 permet d'obturer plus ou moins le faisceau lumineux, en réaction à une commande de l'utilisateur du véhicule ou à une commande automatique, afin de proposer différents modes d'éclairages de la route.

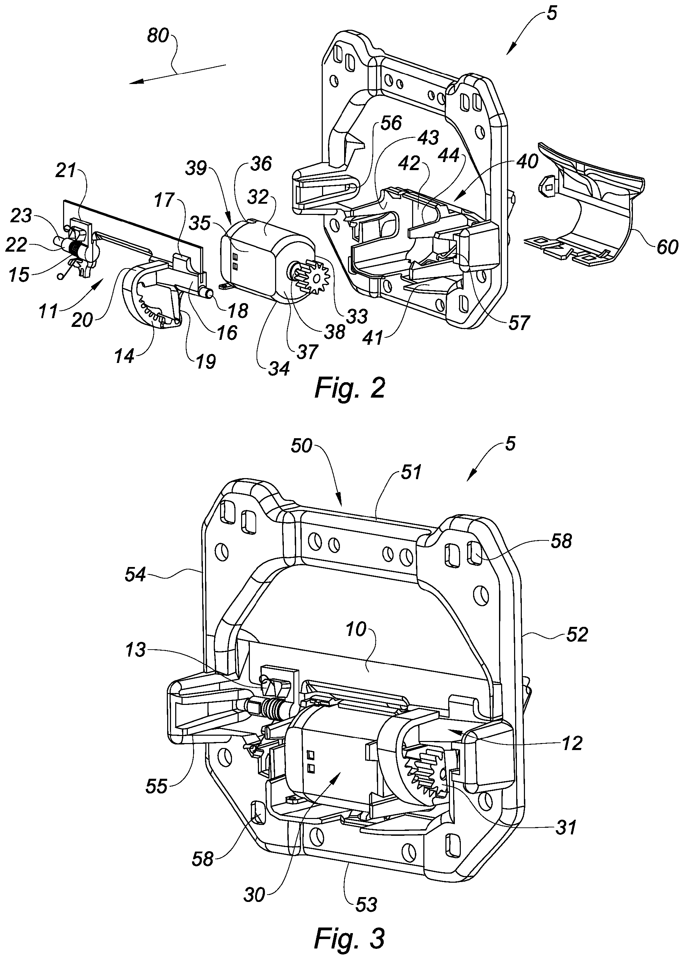

Ce mécanisme de coupure 5 va maintenant être décrit plus en détail grâce aux figures 2 et 3. Dans la suite de la description, les qualifications avant, arrière, droite, gauche, supérieure et inférieure sont définies par rapport au sens de marche avant du véhicule, c'est-à-dire par rapport au sens de la flèche référencée 80 sur la figure 2.

Le mécanisme de coupure 5 comprend une barrette de coupure 10 de forme sensiblement rectangulaire et agencée pour obturer plus ou moins le faisceau lumineux, c'est-à-dire pour couper plus ou moins le faisceau lumineux. La barrette de coupure 10 présente un encombrement longitudinal, mesuré selon un axe d'extension longitudinal de la barrette parallèle à la direction d'extension de la barrette la plus grande, c'est-à-dire ici un grand coté de sa forme sensiblement rectangulaire. Il s'agit ici d'un mécanisme de coupure 5 bi-fonction, c'est-à-dire que la barrette 10 peut se positionner selon deux positions, une première position dans laquelle elle obture partiellement le faisceau lumineux et correspondant aux feux de code et une deuxième position dans laquelle elle n'obture pas le faisceau lumineux et correspondant aux feux de route. Dans sa première position, la barrette de coupure 10 s'étend selon un plan sensiblement vertical alors que dans sa deuxième position elle s'étend dans un plan sensiblement horizontal.

La barrette de coupure 10 est positionnée en face de la source lumineuse. Elle est montée sur un support 11 de barrette comprenant une première partie 12 disposant d'un engrenage 14 à denture interne, située au niveau d'une première extrémité longitudinale de la barrette 10 et une deuxième partie 13 disposant d'un ressort de rappel 15 tendant à ramener la barrette 10 dans sa première position, c'est-à-dire dans sa position sensiblement verticale, la deuxième partie 13 étant située au niveau d'une deuxième extrémité longitudinale de la barrette 10. La barrette de coupure 10 est en acier afin de résister aux fortes chaleurs émises par la source lumineuse alors que la première partie 12 et la deuxième partie 13 du support de barrette 1 sont en plastique, car excentrées par rapport à la source lumineuse et donc moins sollicitées que la barrette 10 par les chaleurs émises par la source lumineuse. Le ressort 15 de la deuxième partie 13 est cependant en métal. La première extrémité longitudinale est située à gauche de la barrette 10 alors que la deuxième extrémité longitudinale est située à droite de la barrette 10.

La deuxième partie 13 comprend une pince 21 pinçant la barrette par le bas et de part et d'autre de celle-ci, c'est-à-dire qu'elle la pince sur une face avant et sur une face arrière de la barrette 10 afin de la soutenir. La pince 21 de la deuxième partie 13 prend naissance au niveau d'un bras 22, que comprend la deuxième partie 13, s'étendant parallèlement à l'axe d'extension longitudinale de la barrette 10. Au niveau d'une extrémité distale du bras 22 située à droite, se trouve une excroissance 23 s'étendant au-delà de la barrette 10 vers la droite. Le ressort 15 est ici enroulé autour du bras 22 de la deuxième partie 13 et exerce une force de rappel sur la pince 21 de la deuxième partie 13.

La première partie 12 du support 11 de barrette comprend un corps central 16 de forme sensiblement parallélépipédique duquel naît une pince 17 pinçant la barrette 10 par le bas afin de la soutenir. La pince 17 de la première partie 12 est similaire à la pince de la deuxième partie 13, c'est-à-dire qu'elle pince la barrette 10 sur une face avant et sur une face arrière de cette dernière. La première partie 12 du support 11 comprend également une excroissance 18, faisant saillie par rapport au corps central 16, vers la gauche et s'étendant au-delà de la barrette 10 vers la gauche.

Du corps central 16 naissent également deux bras, dits premier et deuxième bras 19, 20. Le premier bras 19 s'étend dans un plan commun avec la barrette 10, perpendiculairement à la direction d'extension longitudinale de la barrette 10. Le deuxième bras 20 s'étend selon une direction perpendiculaire au plan dans lequel s'étend la barrette 10, c'est-à-dire perpendiculairement au premier bras 19. L'engrenage 14 à denture interne lie le premier bras 19 au deuxième bras 20 et est de forme sensiblement circulaire de sorte qu'il forme entre le premier et le deuxième bras 19 , 20, un quart de cercle.

Le support 11 de barrette est monté sur une armature 50 de forme sensiblement rectangulaire de sorte qu'elle possède quatre branches reliées entre elles, dites branche supérieure 51, branche gauche 52, branche inférieure 53 et branche droite 54.

Sur la branche droite 54 de l'armature 50 se situe une rainure 55 de forme évasée vers l'avant et disposant d'une ouverture 56 au niveau d'une extrémité arrière, agencée pour recevoir l'excroissance 23 de la deuxième partie de support 13. L'excroissance 23 de la deuxième partie 13 du support 11 de barrette est ainsi insérée dans la rainure 55 depuis l'avant vers l'arrière jusqu'au moment où elle pénètre dans l'ouverture 56. De la même manière, sur la branche gauche 52 de l'armature 50 se situe une rainure 57, de forme similaire à la rainure de la branche gauche 54, c'est-à-dire de forme évasée vers l'avant et disposant d'une ouverture (non visible) au niveau d'une extrémité arrière, agencée pour recevoir l'excroissance 18 de la première partie de support 12.

L'armature 50 comprend en outre des alésages 58, répartis sur ses branches 51, 52, 53, 54 et agencés pour monter le mécanisme de coupure 5 dans le module optique.

L'engrenage 14 à denture intérieure de la première partie 12 est entraîné par un pignon 31 d'un moteur à courant continu 30. Le rapport d'engrenage entre le pignon 31 du moteur 30 et l'engrenage 14 est ici de 1/3. Le fait que l'engrenage 14 soit à denture intérieure permet de reculer le moteur 30 par rapport à l'armature 50 et de réduire ainsi l'encombrement du mécanisme de coupure 5 tout en gardant un rapport d'engrenage de 1/3 nécessaire à l'entraînement en rotation de la barrette 10.

Le moteur est situé en position centrale du mécanisme de coupure, c'est-à-dire qu'il est centré selon une direction longitudinale du mécanisme de coupure. La direction longitudinale du mécanisme s'étend parallèlement à l'extension longitudinale de la barrette de coupure. Le moteur est avantageusement situé en dessous de la barrette de coupure. C'est-à-dire qu'il est situé ici en dessous de la barrette de coupure par rapport à une direction parallèle à un petit coté de la forme sensiblement rectangulaire de la barrette. Avantageusement, le moteur est situé à l'intérieur de l'encombrement longitudinal de la barrette, c'est-à-dire qu'il est compris entre un premier plan passant par la première extrémité longitudinale de la barrette et perpendiculaire à la direction d'extension longitudinale de la barrette et un deuxième plan passant par la deuxième extrémité longitudinale de la barrette et perpendiculaire à la direction d'extension longitudinale de la barrette. Ce positionnement particulier du moteur permet ainsi de réduire l'encombrement général du mécanisme de coupure.

L'engrenage est en particulier positionné à l'intérieur de l'encombrement longitudinal de la barrette de coupure, c'est-à-dire qu'il est compris, lui aussi, entre le premier plan passant par la première extrémité longitudinale de la barrette et perpendiculaire à la direction d'extension longitudinale de la barrette et le deuxième plan passant par la deuxième extrémité longitudinale de la barrette et perpendiculaire à la direction d'extension longitudinale de la barrette. Le positionnement de l'engrenage à l'intérieur de l'encombrement longitudinal de la barrette permet de réduire l'encombrement général du mécanisme de coupure en libérant notamment de l'espace au-delà des extrémités longitudinales de la barrette.

Le moteur étant situé en dessous de l'axe de rotation de la barrette et l'engrenage étant situé à l'intérieur de l'encombrement longitudinal de la barrette, l'engrenage à denture intérieure est particulièrement avantageux car il permet de positionner le moteur au plus près de la barrette, optimisant ainsi l'encombrement en hauteur du mécanisme de coupure et donc du module optique.

Le moteur 30 est de forme sensiblement parallélépipédique de sorte qu'il comprend une face supérieure 32, une face arrière 33, une face inférieure 34, une face avant 35, une face droite 36 et une face gauche 37. La face supérieure 32 et la face inférieure 34, opposées entre elles sont de formes courbées.

Sur la droite du moteur 30, se situe une zone de connexion 39 agencée pour connecter le moteur 30 à une source d'énergie, par exemple une source de courant (non représenté). La zone de connexion 39 définit ainsi la face droite 36 du moteur 30 et une partie des faces supérieure 32, arrière 33, inférieure 34 et avant 35 située à droite du moteur 30. Alors que le reste des parties du moteur dirigées vers l'extérieur sont en métal afin de résister au mieux à la chaleur émises par la source lumineuse et les rayons du soleil, la zone de connexion doit comprendre un isolant électrique du fait de son rôle de connexion, et est donc réalisée en plastique. Dans le but de résister aux fortes chaleurs auxquelles elle peut être soumise, notamment celles dues aux rayons du soleil pénétrant dans le module optique par l'intermédiaire de la lentille, la zone de connexion est selon l'invention de couleur claire, en particulier blanche, le blanc ayant de meilleures propriétés de réflexion de la chaleur que les couleurs sombres comme le noir par exemple. La zone de connexion 39 peut notamment être translucide ou par exemple transparente, toujours dans le but de résister aux fortes chaleurs auxquelles elle peut être soumise.

Au niveau de la face gauche 37 du moteur 30 se situe le pignon 31. Il est monté sur un arbre d'entraînement 38, faisant saillie par rapport à la face gauche 37 du moteur 30 et situé sensiblement au milieu de la face gauche 37 du moteur 30.

Le moteur 30 est monté sur un support 40 de moteur situé au centre et vers l'arrière de l'armature 50, c'est-à-dire entre le moteur et la source lumineuse, une fois le mécanisme de coupure 5 monté dans le module optique. Ainsi et selon l'invention, le moteur 30 est situé entre la lentille et le support moteur 40.

Le support 40 du moteur comprend une paroi inférieure 41 située en vis-à-vis de la face inférieure 34 du moteur 30, une paroi arrière 42 ou fond 42 située en vis-à-vis de la face arrière 33 du moteur 30, d'une partie arrière de la face supérieure 32 et d'une partie arrière de la face inférieure 34 de sorte que le moteur 30 est au contact de la paroi arrière 42. Le support 40 de moteur comprend également une paroi droite 43 en forme de U, une branche centrale du U étant disposée vers l'arrière verticalement et les deux branches latérales du U étant sensiblement parallèles entre elles, horizontales et dirigées vers l'avant. La paroi droite 43 du support 40 de moteur définit ainsi une entaille à l'intérieure de laquelle un bossage (non visible) de la zone de connexion 39, par lequel le moteur se connecte à la source de courant, s'insère et se solidarise avec le support 40 de moteur. De la même manière, le support 40 du moteur comprend une paroi gauche 44 en forme de U, une branche centrale du U étant disposée vers l'arrière verticalement et les deux branches latérales du U étant sensiblement parallèles entre elles, horizontales et dirigées vers l'avant. La paroi droite 43 du support 40 de moteur définit ainsi une entaille à l'intérieure de laquelle l'arbre 38 comprenant le pignon 31 peut s'insérer, le pignon 31 dépassant alors au-delà du support 40 du moteur 30 vers la gauche.

Le mécanisme de coupure 5 comprend également un écran thermique 60 épousant une face externe de la paroi arrière 42 du support 40 du moteur 30, c'est-à-dire une face dirigée vers l'arrière. L'écran thermique 60 est ainsi situé entre le support 40 de moteur et la source lumineuse. Il est en métal de sorte qu'il protège le support 40 de moteur et le moteur 30 de la chaleur dégagée par la source lumineuse.

## Revendications

1. Module optique (1), notamment pour véhicule automobile, comprenant une lentille (4) et un moteur (30) monté dans le module optique (1) sur un support moteur (40),
le module optique (1) comprenant un pignon (31) du moteur (30) entraînant une barrette de coupure (10) d'un faisceau lumineux par l'intermédiaire d'un engrenage (14) à denture intérieure compris entre un premier plan passant par une première extrémité longitudinale de la barrette et perpendiculaire à une direction d'extension longitudinale de la barrette et un deuxième plan passant par une deuxième extrémité longitudinale de la barrette et perpendiculaire à la direction d'extension longitudinale de la barrette,
**caractérisé par le fait que** la barrette (10) est de forme sensiblement rectangulaire positionnable selon une première position dans laquelle la barrette (10) s'étend selon un plan sensiblement vertical et une deuxième position dans laquelle elle s'étend dans un plan sensiblement horizontal, la barrette étant montée sur un support (11) de barrette comprenant une première partie (12) située au niveau de la première extrémité longitudinale de la barrette (10) et une deuxième partie (13) située au niveau de la deuxième extrémité longitudinale de la barrette (10), la première partie (12) disposant de l'engrenage (14) à denture intérieure, la deuxième partie (13) disposant d'un ressort de rappel (15) tendant à ramener la barrette (10) dans la première position, l'engrenage (14) à denture intérieure liant un premier bras (19) à un deuxième bras (20), le premier bras (19) s'étendant dans un plan commun avec la barrette (10) perpendiculairement à la direction d'extension longitudinale de la barrette (10), le deuxième bras (20) s'étendant selon une direction perpendiculaire au premier bras (19), l'engrenage (14) à denture intérieure étant de forme sensiblement circulaire formant un quart de cercle entre le premier bras (19) et le deuxième bras (20), le moteur (30) et le pignon (31) étant compris entre le premier plan et le deuxième plan.

2. Module optique (1) selon la revendication 1, dans lequel le rapport d'engrenage entre le pignon (31) du moteur (30) et l'engrenage (14) est de 1/3.

3. Module optique selon la revendication 1 ou 2, dans lequel le moteur est situé sous un axe de rotation de la barrette de coupure.

4. Module optique selon l'une des revendications précédentes, dans lequel le moteur (30) est situé entre la lentille (4) et le support moteur (40).

5. Module optique (1) selon l'une quelconque des revendications précédentes, dans lequel le moteur (30) comprend une zone de connexion (39) du moteur (30) à une source d'énergie, ladite zone (39) étant en plastique de couleur claire.

6. Module optique (1) selon la revendication 5, dans lequel ladite zone (39) est de couleur blanche.

7. Module optique (1) selon la revendication 5 ou 6, dans lequel ladite zone (39) est transparente.

8. Module optique (1) selon la revendication 5 ou 6, dans lequel ladite zone (39) est translucide.

## Patentansprüche

1. Optisches Modul (1), insbesondere für Kraftfahrzeug, umfassend eine Linse (4) und einen Motor (30), der im optischem Modul (1) auf einem Motorträger (40) montiert ist,
wobei das optische Modul (1) ein Kettenrad (31) des Motors (30) umfasst, das eine Abschaltleiste (10) eines Lichtbündels mittels eines Innenzahnrads (14) antreibt, das zwischen einer ersten Ebene, die durch ein erstes Längsende der Leiste und senkrecht zu einer Längserstreckungsrichtung der Leiste verläuft, und einer zweiten Ebene, die durch ein zweites Längsende der Leiste und senkrecht zur Längserstreckungsrichtung der Leiste verläuft, umfasst ist,
**gekennzeichnet durch** die Tatsache, dass die Leiste (10) in einer im Wesentlichen rechteckigen Form ist, die gemäß einer ersten Position, in der sich die Leiste (10) gemäß einer im Wesentlichen vertikalen Ebene erstreckt, und einer zweiten Position, in der sie sich in einer im Wesentlichen horizontalen Ebene erstreckt, positionierbar ist, wobei die Leiste auf einem Leistenträger (11) montiert ist, der einen ersten Teil (12), der auf Höhe des ersten Längsendes der Leiste (10) liegt, und einen zweiten Teil (13), der auf Höhe des zweiten Längsendes der Leiste (10) liegt, umfasst, wobei der erste Teil (12) über ein Innenzahnrad (14) verfügt, der zweite Teil (13) über eine Rückholfeder (15) verfügt, die dazu neigt, die Leiste (10) in die erste Position zurückzubringen, wobei das Innenzahnrad (14) einen ersten Arm (19) mit einem zweiten Arm (20) verbindet, wobei sich der erste Arm (19) in einer mit der Leiste (10) gemeinsamen Ebene senkrecht zur Längserstreckungsrichtung der Leiste (10) erstreckt, sich der zweite Arm (20) gemäß einer Richtung senkrecht zum ersten Arm (19) erstreckt, wobei das Innenzahnrad (14) in einer im Wesentlichen runden Form ist, die einen Viertelkreis zwischen dem ersten Arm (19) und dem zweiten Arm (20) bildet, wobei der Motor (30) und das Kettenrad (31) zwischen der ersten Ebene und der zweiten Ebene umfasst sind.

2. Optisches Modul (1) nach Anspruch 1, wobei das Übersetzungsverhältnis zwischen dem Kettenrad (31) des Motors (30) und dem Zahnrad (14) 1/3 ist

3. Optisches Modul nach Anspruch 1 oder 2, wobei der Motor unter einer Drehachse der Abschaltleiste liegt.

4. Optisches Modul nach einem der vorstehenden Ansprüche, wobei der Motor (30) zwischen der Linse (4) und dem Motorträger (40) liegt.

5. Optisches Modul (1) nach einem der vorstehenden Ansprüche, wobei der Motor (30) einen Anschlussbereich (39) des Motors (30) an eine Energiequelle umfasst, wobei der Bereich (39) aus hellfarbigem Kunststoff ist.

6. Optisches Modul (1) nach Anspruch 5, wobei der Bereich (39) weißfarbig ist.

7. Optisches Modul (1) nach Anspruch 5 oder 6, wobei der Bereich (39) durchsichtig ist.

8. Optisches Modul (1) nach Anspruch 5 oder 6, wobei der Bereich (39) lichtdurchlässig ist.

## Claims

1. Optical module (1), in particular for a motor vehicle, comprising a lens (4) and a motor (30) mounted in the optical module (1) on a motor support (40), the optical module (1) comprising a pinion (31) of the motor (30) driving a cutoff bar (10) for a light beam by utilising a gear (14) with internal teeth between a first plane passing through a first longitudinal end of the bar and perpendicular to a longitudinal direction of extension of the bar and a second plane passing through a second longitudinal end of the bar and perpendicular to the longitudinal direction of extension of the bar, **characterised in that** the bar (10) has a substantially rectangular shape that can be positioned according to a first position wherein the bar (10) extends along a substantially vertical plane and a second position wherein it extends in a substantially horizontal plane, with the bar being mounted on a bar support (11) comprising a first portion (12) located on the first longitudinal end of the bar (10) and a second portion (13) located on the second longitudinal end of the bar (10), with the first portion (12) having the gear (14) with internal teeth, the second portion (13) having a return spring (15) that urges the bar (10) to return to the first position, with the gear (14) with internal teeth connecting a first arm (19) to a second arm (20), the first arm (19) extending in a common plane with the bar (10) perpendicularly to the longitudinal direction of extension of the bar (10), the second arm (20) extending along a direction perpendicular to the first arm (19), the gear (14) with internal teeth having a substantially circular shape forming a quarter of a circle between the first arm (19) and the second arm (20), the motor (30) and the pinion (31) being between the first plane and the second plane.

2. Optical module (1) according to claim 1, wherein the gear ratio between the pinion (31) of the motor (30) and the gear (14) is 1/3.

3. Optical module according to claim 1 or 2, wherein the motor is located under an axis of rotation of the cutoff bar.

4. Optical module according to any of the preceding claims, wherein the motor (30) is located between the lens (4) and the motor support (40).

5. Optical module (1) according to any preceding claim, wherein the motor (30) comprises a zone (39) for connection of the motor (30) to a source of energy, said zone (39) being made of plastic of a light colour.

6. Optical module (1) according to claim 5, wherein said zone (39) is white in colour.

7. Optical module (1) according to claim 5 or 6, wherein said zone (39) is transparent.

8. Optical module (1) according to claim 5 or 6, wherein said zone (39) is translucent.
